# EUROPÄISCHE PATENTSCHRIFT

(11) **EP 1 842 411 B1**
(45) Veröffentlichungstag und Bekanntmachung des Hinweises auf die Patenterteilung: **03.09.2008**
(21) Anmeldenummer: 07006491.0
(22) Anmeldetag: 29.03.2007
(51) Int. Cl.: A01B 61/04, A01B 63/24

(54) **Landwirtschaftliches Gerät**
Agricultural implement
Machine agricole

(30) Priorität: 04.04.2006 DE 10615614
(43) Veröffentlichungstag der Anmeldung: 10.10.2007
(73) Patentinhaber: Amazonen-Werke H. Dreyer GmbH & Co. KG, 49205 Hasbergen (DE)
(72) Erfinder: Pokriefke, Michael, 27798 Hude (DE)

(56) Entgegenhaltungen:
- WO-A-99/39563
- DE-A1- 4 121 218
- DE-A1- 10 307 396
- DE-A1-9102004 008 08

## Beschreibung

Die Erfindung betrifft ein landwirtschaftliches Gerät gemäß des Oberbegriffes des Patentanspruches 1.

Ein derartiges landwirtschaftliches Gerät ist beispielsweise in der WO 99/39 563 oder DE 103 07 396 A1 beschrieben. Hierbei ist jedem als reifenartiges Walzenelement ausgebildeten Bodenbearbeitungselement ein Hydraulikzylinder eines Druckausgleichssystems zugeordnet. Die einzelnen Hydraulikzylinder sind in Parallelschaltung über Verbindungsleitungen miteinander verbunden, so dass die Walzenelemente unabhängig voneinander in Höhenrichtung entsprechend der Bodenoberfläche ausweichen und sich dieser anpassen können.

Die Ausgestaltung des Ausgleichssystems ist aufgrund der jedem Bodenbearbeitungsgerät zugeordneten einzelnen Hydraulikzylinder relativ aufwendig.

Der Erfindung liegt die Aufgabe zugrunde, ein wesentlich vereinfachtes Ausgleichssystem für die Bodenbearbeitungselemente vorzuschlagen.

Diese Aufgabe wird erfindungsgemäß durch das kennzeichnende Merkmal des Patentanspruches 1 gelöst. Infolge dieser Maßnahmen wird in einfacher Weise zwischen dem Rahmen und den Trägerarmen der Bodenbearbeitungselemente ein durchgehendes Schlauchelement über die Breite oder den einzelnen Teilbreiten des Gerätes angeordnet, so dass die einzelnen Walzenelemente unabhängig voneinander durch Zusammendrücken des Schlauches und auseinanderdrücken des Schlauches in zusammenwirkender Weise sich zueinander bewegen und sich der Bodenoberfläche anpassen können.

Eine einfache Ausgestaltung und gute Wirkungsweise des Schlauches als Ausgleichselement lässt sich dadurch erreichen, dass das Schlauchelement im Querschnitt kreisförmig oder oval ausgebildet ist.

Um eine exakte Positionierung des Schlauches zwischen dem Rahmen und den Tragarmen der Bodenwalze sicherzustellen, ist vorgesehen, dass der Schlauch in rinnenförmigen Aufnahmeelemente, die an dem Rahmen und/oder den Bodenbearbeitungselementen oder deren Tragarmen zumindest annähernd gegenüberliegend angeordnet sind, aufgenommen ist.

Um ein ruhiges und gleichmäßiges Ausgleichssystem für die Bodenbearbeitungselemente, ohne dass sich das System aufschaukelt, zuschaffen, ist vorgesehen, dass das Medium eine hochviskose Flüssigkeit mit Dämpfungseigenschaften ist. Um das erfindungsgemäße Ausgleichssystem weiter zu optimieren, ist vorgesehen, dass der Schlauch derart mit Flüssigkeit gefüllt ist, dass noch eine Querschnittsveränderung des Schlauches und ein Umfließen der Flüssigkeit innerhalb des Schlauches bei partiellen Querschnittsveränderungen des Schlauches möglich ist.

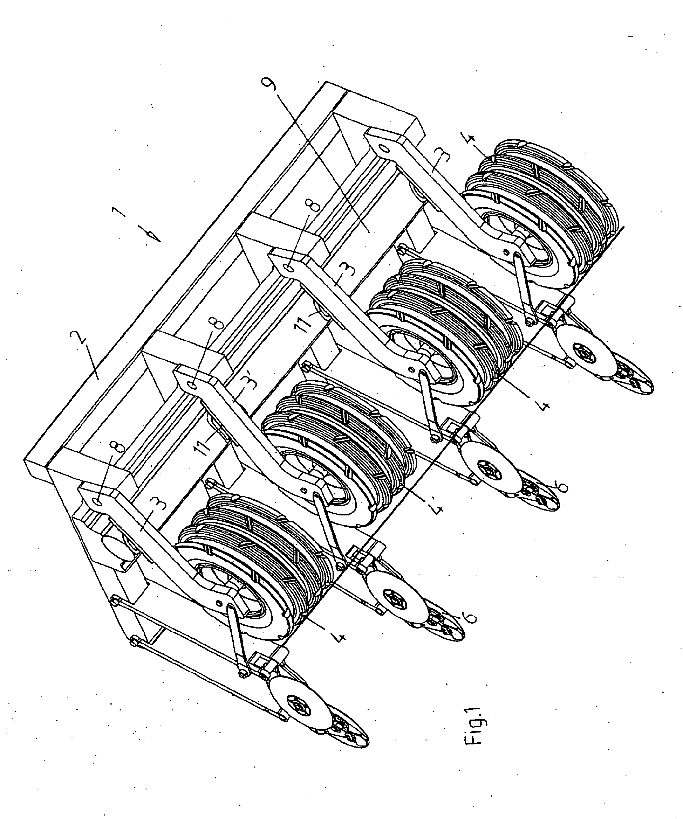

Weitere Einzelheiten der Erfindung sind der Beispielsbeschreibung und den Zeichnungen zu entnehmen. Hierbei zeigen
- Fig. 1: einen Teilbereich des landwirtschaftlichen Gerätes in perspektivischer Darstellung,

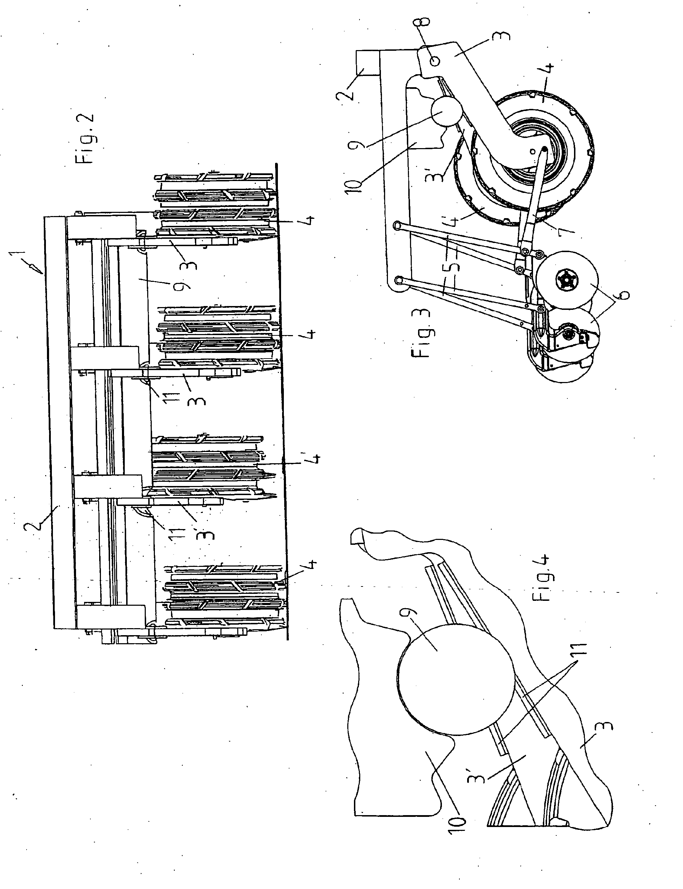

- Fig. 2: den Teilbereich des Gerätes gemäß Fig. 1 in der Ansicht von vorne
- Fig. 3: den Teilbereich des Gerätes gemäß Fig. 1 in Seitenansicht und
- Fig. 4: das Detail x aus Fig. 3 zur Darstellung der Anordnung des Schlauchelementes.

Das landwirtschaftliche Gerät weist mehrere nebeneinander angeordnete Teilbereiche 1, wie sie in den Zeichnungen dargestellt sind, auf. An dem Rahmen 2 sind mittels Tragarmen 3 die als Walzenelemente 4 ausgebildeten Bodenbearbeitungselemente angeordnet. Hinter den Bodenbearbeitungselementen 4 sind mittels einer parallelogrammartigen Halterung 5 die Säschare 6, die über die Verbindungsstange 7 von den Walzenelementen 4 in ihrer Eindringtiefe in den Boden geführt werden, angeordnet.

Zwischen dem Rahmen 2 und den Tragarmen 3 der Walzenelemente 4, die quer zur Fahrtrichtung nebeneinander und in Höhenrichtung unabhängig voneinander mittels der Gelenke 8 am Rahmen 2 angeordnet sind, ist das als Schlauchelement 9 ausgebildete Ausgleichssystem angeordnet. Das Schlauchelement 9 ist mit einem inkompressiblen Medium gefüllt, so dass das Ausgleichssystem als ein zusammendrückbares und mit einem inkompressiblen Medium gefülltes Schlauchelement 9 ausgebildet ist. Das Schlauchelement 9 ist im Querschnitt kreisförmig ausgebildet. Um eine sichere Lage des Schlauchelementes zwischen dem Rahmen 2 und den Tragarmen 3 der Walzenelemente 4 zu erreichen, ist das Schlauchelement 9 in rinnenförmigen Aufnahmeelementen 10, die am Rahmen 2 angeordnet sind, aufgenommen. Es auch möglich, dass rinnenförmigen Aufnahmeelemente sind am Rahmen und an den Trägerarmen 3 gegenüberliegend angeordnet sind.

Das inkompressieble Medium ist eine hoch viskose Flüssigkeit mit Dämpfungseigenschaften.

Des Weiteren ist der Schlauch 9 derart mit Flüssigkeit gefüllt, dass noch eine Querschnittsveränderung des Schlauches 9 und ein umfließen der Flüssigkeit innerhalb des Schlauches 9 bei partiellen Querschnittsveränderungen des Schlauches 9 durch die Bewegung der Tragarme 3 der Walzenelemente 4 zueinander möglich ist.

Im Ausführungsbeispiel ist das Walzen- bzw. Reifenelement 4' gegenüber den anderen Walzenelementen 4 nach oben ausgelenkt, so dass der Tragarm 3' den Schlauch 9 im Bereich des Tragarmes 3' zusammengedrückt hat. An den Tragarmen 4 und 4' sind Auflageplatten 11 für den Schlauch 9 angeordnet.

## Patentansprüche

1. Landwirtschaftliches Gerät mit mehreren nebeneinander angeordneten und unabhängig voneinander in Höhenrichtung mittels Gelenken (8) am Rahmen (2) bewegbar angeordneten Bodenbearbeitungselementen (4), wie Scheiben, zinken, Säschare (6), Walzenelement, etc. wobei zwischen dem Rahmen (2) und dem Bodenbearbeitungselementen (4) ein Ausgleichselemente aufweisendes Ausgleichssystem (9) angeordnet ist, **dadurch gekennzeichnet, dass** das Ausgleichssystem als ein zusammendrückbares und mit einem inkompressiblen Medium gefülltes Schlauchelement (9) ausgebildet sind.

2. Gerät nach Anspruch 1, **dadurch gekennzeichnet, dass** das Schlauchelement (9) im Querschnitt kreisförmig oder oval ausgebildet ist.

3. Gerät nach Anspruch 1, **dadurch gekennzeichnet, dass** der Schlauch in rinnenförmige Aufnahmeelemente (10), die an dem Rahmen (2) und/oder den Bodenbearbeitungselementen (4) oder deren Tragarmen (3,3') zumindest annähernd gegenüberliegend angeordnet sind, aufgenommen ist.

4. Gerät nach Anspruch 1, **dadurch gekennzeichnet, dass** das Medium eine hochviskose Flüssigkeit mit Dämpfungseigenschaften ist.

5. Gerät nach einem oder mehreren der genannten Ansprüche, **dadurch gekennzeichnet, dass** der Schlauch (9) derart mit Flüssigkeit gefüllt ist, dass noch eine Querschnittsveränderung des Schlauches (9) und ein Umfließen der Flüssigkeit innerhalb des Schlauches (9) bei partitiellen Querschnittsveränderungen des Schlauches (9) möglich ist.

## Claims

1. Agricultural implement having a plurality of adjacently disposed soil cultivating units (4), such as discs, tines, sowing coulters (6), roller units, etc., which are displaceably disposed independently of one another in the vertical direction by means of pivots (8) on the frame (2), a compensating system (19), including compensating units, being disposed between the frame (2) and the soil cultivating units (4), **characterised in that** the compensating system is designed as a compressible tubular unit (9), which is filled with an incompressible medium.

2. Implement according to claim 1, **characterised in that** the tubular unit (9) is designed with a circular or oval cross-section.

3. Implement according to claim 1, **characterised in that** the tube is accommodated in groove-shaped receiving units (10), which are disposed on the frame (2) and/or on the soil cultivating units (4) or on the supporting arms (3, 3') thereof so as to be situated in an at least approximately opposite manner.

4. Implement according to claim 1, **characterised in that** the medium is a high-viscosity fluid having damping properties.

5. Implement according to one or more of the claims mentioned, **characterised in that** the tube (9) is filled with fluid in such a manner that a further change in the cross-section of the tube (9) is possible, and a circulation of the fluid within the tube (9) is possible with partial changes in the cross-section of the tube (9).

## Revendications

1. Machine agricole comportant plusieurs outils pour le travail du sol (4), juxtaposés, et réglables en hauteur indépendamment les uns des autres à l'aide d'articulations (8) qui les les relie de façon mobile à un châssis (2), éléments de travail du sol tels que disques, dents, socs de semoir (6), éléments de rouleau, etc..,
et un système de compensation (9) comportant un élément de compensation, étant prévu entre le châssis (2) et les éléments pour le travail du sol (4)
**caractérisée en ce que**
le système de compensation est réalisé sous la forme d'un élément de tuyau (9) susceptible d'être rétracté, cet élément étant rempli d'un fluide incompressible.

2. Appareil selon la revendication 1,
**caractérisé en ce que**
l'élément de tuyau (9) a une section circulaire ou ovale.

3. Appareil selon la revendication 1,
**caractérisé en ce que**
le tuyau est logé dans des éléments de réception (10) en forme de goulottes, portés par le châssis (2) et/ou par les éléments de travail du sol (4) ou par leurs bras de support (3, 3'), au moins sensiblement dans des positions opposées.

4. Appareil selon la revendication 1,
**caractérisé en ce que**
le milieu est un liquide très visqueux ayant des caractéristiques d'amortissement.

5. Appareil selon les revendications précédentes,
**caractérisé en ce que**
le tuyau (9) est rempli de liquide de façon à permettre une variation de section du tuyau (9) et un mouvement de circulation du liquide dans le tuyau (9) avec des variations partielles de section du tuyau (9).
